(19) Europäisches Patentamt
European Patent Office
Office européen des brevets

(11) Veröffentlichungsnummer: **0 362 689 B1**

(12) # EUROPÄISCHE PATENTSCHRIFT

(45) Veröffentlichungstag der Patentschrift: **17.05.95**

(51) Int. Cl.⁶: **C08G 18/32**, C08G 18/38, C08G 75/18

(21) Anmeldenummer: **89117932.7**

(22) Anmeldetag: **28.09.89**

(54) **Polyharnstoff und Film aus mindestens einer monomolekularen Schicht eines Polyharnstoffs.**

(30) Priorität: **01.10.88 DE 3833440**

(43) Veröffentlichungstag der Anmeldung:
**11.04.90 Patentblatt 90/15**

(45) Bekanntmachung des Hinweises auf die Patenterteilung:
**17.05.95 Patentblatt 95/20**

(84) Benannte Vertragsstaaten:
**DE**

(56) Entgegenhaltungen:
**EP-A- 0 058 335**
**EP-A- 0 199 086**
**EP-A- 0 232 829**
**DE-A- 2 807 787**

(73) Patentinhaber: **HOECHST AKTIENGESELLSCHAFT**

**D-65926 Frankfurt (DE)**

(72) Erfinder: **Prass, Werner, Dr.**
**Bahnstrasse 19**
**D-6500 Mainz (DE)**
Erfinder: **Scheunemann, Ude, Dr.**
**Feldbergstrasse 12**
**D-6237 Liederbach (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung bezieht sich auf spezielle Polyharnstoffe mit Alkylseitenketten, auf einen Film aus mindestens einer monomolekularen Schicht dieser Polyharnstoffe auf einem festen Schichtträger (= sogenannte Schichtelemente) und Verfahren zur Herstellung der Polyharnstoffe und der Schichtelemente.

Zur Herstellung von geordneten Schichten organischer Polymerer mit langkettigen Seitengruppen wird überwiegend das Langmuir-Blodgett (LB) Verfahren benutzt. Bei diesem Verfahren werden Moleküle auf einer Wasseroberfläche gespreitet und durch Verkleinerung der Fläche pro Molekül die langen Alkylseitenketten parallel angeordnet. Bei konstantem Schub werden die Moleküle durch Ein- und Austauchen auf ein Substrat aufgezogen. Pro Tauchgang wird dabei eine monomolekulare Schicht unter Erhalt ihrer Ordnung übertragen.

Für den Aufbau von LB-Filmen verwendet man amphiphile Moleküle, d. h. Moleküle, die ein hydrophiles Ende (einen "Kopf") und ein hydrophobes Ende (einen "Schwanz") haben. Um eine höhere Stabilität der LB-Filme zu erreichen, wurden auch schon polymere LB-Filme hergestellt.

Hierzu wurden einmal monomere ungesättigte Amphiphile nach der Herstellung des Films polymerisiert. Man hat aber auch schon unmittelbar organische Polymere mit langen Alkylseitenketten zur Schichtherstellung eingesetzt (EP-A2-0 232 829). Bei beiden Arten von polymeren Filmen treten jedoch mehr Fehlstellen als bei monomeren Filmen auf. Bei der Polymerisation in der Schicht kommt es in nahezu allen Fällen zu einer Kontraktion der Schicht, mit der Ausbildung von Fehlstellen. bei Filmen aus Polymeren führt die hohe Viskosität der Filme zu Problemen bei der Schichtübertragung.

Aus EP 199 086 ist bereits ein Polyharnstoff bekannt, der aus einem sekundären aromatischen Diamin und einem Isocyanat-terminierten Urethanpräpolymeren hergestellt wird. Dieser Polyharnstoff enthält also die Einheit CONH-Y-NHCO, wobei Y eine Urethangruppe aufweist.

Es bestand daher die Aufgabe, aus niedermolekularen Ausgangsprodukten Polykondensate zu gewinnen, die sich besonders gut auf Schichtträger übertragen lassen.

Die vorliegende Erfindung löst diese Aufgabe. Sie beruht auf der Beobachtung, daß in Polyharnstoffen verstärkt Wasserstoff-Brückenbindungen auftreten und hierdurch die Beständigkeit der Schichtstruktur entsprechender Filme und die Tendenz zur Ordnung beim Spreiten auf Wasser erhöht und bei der Herstellung von mehrlagigen Schichten das Übertragungsverhalten verbessert wird.

Es wurden nun neue Polyharnstoffe gefunden, aus denen sich z.B. mit Hilfe der Langmuir-Blodgett-Technik, geordnete Schichten auf einem festen Schichtträger herstellen lassen.

Eine Ausgestaltung der Erfindung betrifft einen Polyharnstoff der allgemeinen Formel (I)

$$\left[ \begin{array}{l} -\underset{H}{N}-X-\underset{H}{N}-CO\underset{H}{N}-Y-\underset{H}{N}CO- \end{array} \right]_n \qquad (I)$$

wobei

- X und Y unabhängig voneinander einen zweiwertigen Rest bedeuten, dessen Kette jeweils mindestens zwei C-Atome enthält und
- n eine ganze Zahl über 4 ist, der mindestens eine Alkylgruppe $C_6$-$C_{26}$- pro wiederkehrende Einheit aufweist.

Er ist dadurch gekennzeichnet, daß

- Y in der Kette frei ist von Stickstoff und
- X einen 3,5-verknüpften Phenylrest darstellt, der in 1-Stellung durch einen der Reste
  - -COOH
  - $-CO_2$-($C_1$-$C_{24}$)-Alkyl,
  - $C_4$-$C_{24}$)-Alkyl,
  - -O-($C_{14}$-$C_{24}$)-Alkyl,
  - $-NR^4R^5$, wobei $R^4$ und $R^5$ unabhängig voneinander Alkylreste sind, die jeweils 10 bis 24, insbesondere 14 bis 22, C-Atome enthalten, oder
  - $-CO-NR^4R^5$, wobei $R^4$ und $R^5$ unabhängig voneinander Wasserstoff oder Alkylreste mit 1 bis 24 C-Atomen bedeuten,

substituiert ist.

Eine andere Ausgestaltung der Erfindung betrifft einen Polyharnstoff der allgemeinen Formel (II)

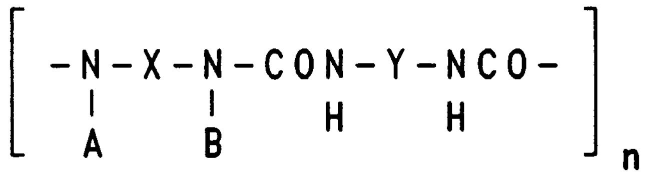

(II)

wobei

X und Y unabhängig voneinander einen zweiwertigen Rest bedeuten, dessen Kette jeweils mindestens zwei C-Atome enthält und

n eine ganze Zahl über 4 ist, und der Polyharnstoff mindestens eine Alkylgruppe $C_6$-$C_{26}$- pro wiederkehrende Einheit aufweist.

Er ist dadurch gekennzeichnet, daß

A und B unabhängig voneinander $C_1$-$C_{26}$-Alkylgruppen bedeuten und mindestens eine der Ketten X und Y mindestens eine $CH_2$-Gruppe enthält und Y in der Kette frei ist von Stickstoff.

Die verwendeten Polyharnstoffe sind streng alternierend aus Diamin- und Carbonyl-Einheiten aufgebaut. Die unterschiedlichen Ordnungstendenzan von Polymerhauptkette (Tendenz zu Polymerknäuel) und Alkylseitenkette (Tendenz zur Kristallisation) können gleichzeitig verwirklicht werden.

Es ist dabei von Vorteil, wenn X und Y mindestens eine $CH_2$-Gruppe in der Kette enthalten, weil durch die Einführung mindestens einer $CH_2$-Gruppe in die Hauptkette des Polymeren deren Flexibilität und die Ordnung der gespreiteten Schicht steigt.

Beispielsweise kann Y für den Rest $(CH_2)_a$ stehen, wobei a eine ganze Zahl von 2 bis 20 ist. Die Gruppe Y kann auch für den Rest $(CH_2CH_2O)_b$-$CH_2$-$CH_2$ stehen, wobei b eine Zahl von 1 bis 12 ist. Y kann auch eine unsubstituierte oder substituierte aromatische Gruppe sein, beispielsweise ein unsubstituierter oder substituierter Phenylen- oder Naphthylenrest.

Wegen der leichteren Zugänglichkeit der Amine und weil leichter einheitliche Endprodukte gewonnen werden können, ist es vorteilhaft, wenn Verbindungen der allgemeinen Formel II eingesetzt werden, in denen A = B ist.

Es ist ferner bevorzugt, wenn in diesen Verbindungen der Rest X in der Kette frei ist von Stickstoff. Beispielsweise kann X die allgemeine Formel $(CH_2)_c$-$X^1$-$(CH_2)_c$ aufweisen, wobei c für 0,1 oder 2 und $X^1$ für eine substituierte oder unsubstituierte aromatische Gruppe steht. X kann insbesondere eine substituierte oder unsubstituierte aromatische Gruppe bedeuten. Wenn die Gruppen X und/oder Y eine substituierte aromatische Gruppe enthalten oder aus einer substituierten aromatischen Gruppe bestehen, so kann diese aromatische Gruppe substituiert sein durch mindestens einen der folgenden Reste:

- COOH,
- $CO_2$-Alkyl, wobei die Alkylgruppe 1 bis 24 C-Atome enthält,
- Alkyl mit 4 bis 24 C-Atomen,
- O-Alkyl, wobei die Alkylgruppe 14 bis 24 C-Atome enthält,
- $NR^4R^5$, wobei $R^4$ und $R^5$ unabhängig voneinander Alkylgruppen mit jeweils 10 bis 24, insbesondere 14 bis 22 C-Atome sind,
- CO-$NR^4R^5$, wobei $R^4$ und $R^5$ unabhängig voneinander Wasserstoff oder Alkylreste mit 1 bis 24 C-Atomen bedeuten.

Besonders bevorzugt ist als substituierter aromatischer Rest in diesem Zusammenhang ein in 1-Stellung substituierter 3,5-verknüpfter Phenylenrest. Verschiedene 4-Chlor-3,5-diaminobenzoesäure-alkylester werden in der DE-OS 19 40 363 beschrieben.

Wenn Polyharnstoffe der allgemeinen Formel (II) eingesetzt werden, in denen X für eine Gruppe der allgemeinen Formel -$(CH_2)_c$-$X^1$-$(CH_2)_c$, mit c = 0, 1 oder 2 steht, und $X^1$ eine aromatische Gruppe ist, oder Y eine aromatische Gruppe bedeutet, so ist diese aromatische Gruppe vorzugsweise substituiert durch einen der folgenden Reste:

- $OR^2$,
- $CH_2OR^2$,
- $SO_3R^2$,
- $CONHR^2$,
- $CONR^2R^3$,

wobei $R^2$ und $R^3$ unabhängig voneinander Wasserstoff, $C_1$-$C_4$-Alkyl oder $C_2$-$C_4$-Hydroxyalkyl bedeuten.

Die beschriebenen Polyharnstoffe lassen sich z.B. dadurch herstellen, daß man ein Diamin der Formel NHA-X-NHB mit etwa äquimolaren Mengen eines Diisocyanats OCN-Y-NCO umsetzt, wobei A, B, X und Y die oben beschriebene Bedeutung aufweisen. Beispielsweise kann man Diamine der Formel $R^1$-NH-X-NH-$R^1$, wobei $R^1$ eine Alkylgruppe mit 4 bis 24, vorzugsweise 14 bis 22 C-Atomen bedeutet, mit etwa äquimolaren Mengen eines Diisocyanats der allgemeinen Formel OCN-$R^3$-NCO umsetzen, wobei $R^3$ für eine Polymethylenkette mit 0 bis 10 Kohlenstoffatomen steht.

Beispiele für einsetzbare Diamine finden sich in Tabelle 1, Beispiele für hergestellte Polyharnstoffe in Tabelle 2.

Für die Polyaddition können statt je eines Diamins bzw. eines Diisocyanats auch Gemische von Diaminen bzw. Diisocyanaten eingesetzt werden.

Zur Herstellung der erfindungsgemäßen Filme werden die organischen Polyadditionsprodukte in einem flüchtigen Lösungsmittel (z. B. $CH_2Cl_2$, ggfs. unter Zusatz eines wasserlöslichen, stark polaren Lösungsmittel wie Dimethylformamid, Dimethylsulfoxid oder N-Methylpyrrolidon) gelöst und auf die Oberfläche einer wäßrigen Lösung in einer Filmwaage gebracht (gespreitet). Aus der Abmessung der Oberfläche, dem Spreitvolumen und der Konzentration der Lösung wird die mittlere Fläche pro Repetiereinheit berechnet. Phasenübergänge bei der Kompression der Moleküle lassen sich in der Schub-Flächen-Isotherme verfolgen.

Die Moleküle werden mit einer Barriere zusammengeschoben, wobei die Alkylketten bei wachsender Oberflächendichte im wesentlichen senkrecht zur Grenzschicht orientiert werden. Während der Kompression entsteht durch Selbstorganisation der Moleküle an der Grenzschicht ein monomolekularer Film, dessen konstante Schichtdicke durch die Kettenlänge der Moleküle und deren Tiltwinkel (das ist der Winkel, um den die Molekülketten auf der Wasseroberfläche gegen die Normale gekippt sind) bestimmt wird. Die typische Dicke eines solchen Films liegt bei 2 - 3 nm.

Der Film wird bei konstantem Schub durch Eintauchen oder Austauchen eines geeigneten Trägers unter Erhalt der Ordnung von der Wasseroberfläche abgenommen.

Als Subphase für die Monofilmherstellung dienen meist Wasser oder wäßrige Lösungen. Es sind aber auch andere Flüssigkeiten mit hoher Oberflächenspannung, wie z. B. Glyzerin, Glykol, Dimethylsulfoxid, Dimethylformamid oder Acetonitril verwendbar, soweit die Polyharnstöffe sich in diesen Flüssigkeiten nicht lösen.

Als Träger kommen beliebige feste, vorzugsweise dimensionsstabile Substrate aus unterschiedlichen Materialien in Betracht. Die als Schichtträger dienenden Substrate können beispielsweise transparent oder lichtdurchlässig, elektrisch leitend oder isolierend sein. Das Substrat kann hydrophob oder hydrophil sein. Die Oberfläche des Substrats, auf die die LB-Schicht aufgebracht wird, kann hydrophobiert sein. Die zu beschichtende Oberfläche des Substrats sollte möglichst rein sein, damit die Ausbildung einer dünnen, geordneten Schicht nicht gestört wird. Insbesondere die Anwesenheit von oberflächenaktiven Stoffen auf der zu beschichtenden Oberfläche der Substrate kann die Schichtherstellung beeinträchtigen. Es ist möglich, die als Schichtträger dienenden Substrate auf der zu beschichtenden Oberfläche vor dem Aufbringen der LB-Filme zunächst mit einer Zwischenschicht zu versehen, um z.B. die Haftung des Films auf dem Substrat zu verbessern.

Als Materialien für die Substrate können beispielsweise Metalle, wie etwa Gold, Platin, Nickel, Palladium, Aluminium, Chrom, Niob, Tantal, Titan, Stahl und dergleichen verwendet werden. Andere geeignete Materialien für die Substrate sind Kunststoffe, wie beispielsweise Polyester, etwa Polyethylenterephthalat oder Polybutylenterephthalat, Polyvinylchlorid, Polyvinylidenchlorid, Polytetrafluorethylen, Polystyrol, Polyethylen oder Polypropylen.

Gleichermaßen kommen auch Halbleiter, wie Silizium, Germanium oder Galliumarsenid oder auch Glas, Siliziumdioxid, keramische Werkstoffe oder Celluloseprodukte für die Substrate in Betracht. Die Oberfläche von Glas und anderen hydrophilen Substraten kann, sofern erforderlich, in an sich bekannter Weise durch Umsetzung mit Alkylsilanen oder Hexamethyldisilazan hydrophobiert werden. Die Auswahl der Substratmaterialien richtet sich in erster Linie nach dem Verwendungszweck der aus dem erfindungsgemäßen Film hergestellten Schichtelemente. Für optische Elemente werden in der Regel transparente, lichtdurchlässige Substrate als Schichtträger eingesetzt. Werden die erfindungsgemäßen Schichtelemente beispielsweise in der Elektronik oder bei elektrochemischen Prozessen verwendet, dienen als Substrate insbesondere elektrisch leitfähige Materialien, wie Metalle oder metallische Oberflächenschichten, beispielsweise auf Kunststoffolien oder Glas.

Die als Träger für die erfindungsgemäßen Filme dienenden Substrate können, je nach Verwendungszweck, beliebige Formen aufweisen. Beispielsweise können sie film-, folien-, platten-, bandförmig oder auch zylinderförmig sein oder unter anderen beliebigen Formen ausgewählt werden. Im allgemeinen wird es sich bei den Schichtträgern um flache, ebene Substrate handeln, wie z.B. Filme, Folien, Platten, Bänder und

dergleichen. Die zu beschichtende Oberfläche der Substrate ist vorzugsweise glatt, wie es für die Herstellung von LB-Filmen üblich ist. Bei flachen, ebenen Substraten können die erfindungsgemäßen Filme auf eine oder beide Oberflächen des Substrats aufgebracht werden.

Der erfindungsgemäße Film zeichnet sich durch eine stabile Multischichtstruktur mit wenigen Defektstellen und einer durch die Molekülstruktur einstellbaren Ordung in der Schicht aus.

Solche Filme auf Substraten eignen sich beispielsweise in optischen Wellenleitersystemen oder zur Herstellung von Filtern für optische Zwecke. Aufgrund der geringen kritischen Oberflächenspannung sind die Filme auch zur Verbesserung der Reibungseigenschaften von Materialien, zur Herstellung von Schutzschichten sowie für weitere einschlägige Anwendungen geeignet.

Die Erfindung wird durch die nachfolgenden Beispiele näher erläutert.

Beispiel 1:

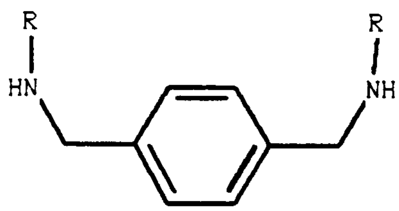

R = $-(CH_2)_{17}-CH_3$

27.0 g (0.1 mol) Octadecylamin und 6.7 g (0.05 mol) Terephthaldialdehyd werden in 400 ml Ethanol aufgeschlämmt und 2 Stunden unter Rückfluß gekocht. Anschließend läßt man über Nacht abkühlen und kristallisiert das Produkt aus Ethanol um. Man erhält 26.2 g (0.041 mmol) farblose Plättchen vom Schmelzpunkt 73 - 74 °C.

$^1$H-NMR ($CDCl_3$, 100 MHz): $\delta$ = 0.85 (t), 1.25 (m), 1.6 (m), 3.6 (t), 7.77 (s), 8.3 (t)

12.74 g (20 mmol) der Schiffschen Base werden in einem Glasautoklaven bei 50 °C in 200 ml Ethanol gelöst, 12 g frisch bereitetes Raney-Nickel zugegeben und bei 3 bar 90 Minuten lang hydriert. Danach wird der Autoklav abgekühlt und entspannt. Das Nickel wird abfiltriert und das Ethanol am Rotationsverdampfer entfernt. Man erhält das Rohprodukt in praktisch quantitativer Ausbeute. 1.8 g des Rohprodukts werden säulenchromatographisch an Kieselgel (Laufmittel Chloroform/Methanol 20:1 (v/v)) gereinigt. Man erhält 1.22 g Reinprodukt (weißes Pulver) vom Schmelzpunkt 76 - 78 °C.

$^1$H-NMR ($CDCl_3$, 100 MHz): $\delta$ = 0.85 (t), 1.25 (m), 2.28 (m), 2.6 (m), 3.75 (m), 7.26 (s)

Entsprechend dieser Vorschrift wurde auch das Derivat mit zwei N-Hexadecylketten hergestellt.

Beispiel 2:

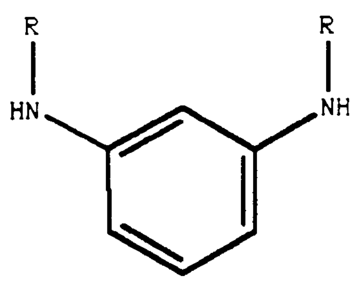

R = $-(CH_2)_{15}-CH_3$

36.3 g (.132 mol) Palmitinsäurechlorid werden in 400 ml N-Methylpyrrolidon gelöst und bei Raumtemperatur eine Lösung von 6.48 g (0.06 mol) 1,3-Phenylendiamin und 18.24 g (0.08 mol) Triethylamin in 200 ml N-Methylpyrryolidon im Verlauf einer Stunde zudosiert. Man läßt über Nacht bei Raumtemperatur stehen, saugt das ausgefallene Produkt ab und kristallisiert aus Chloroform um und erhält 25.6 g (44 mmol) eines weißen Pulvers vom Schmelzpunkt 133.2 - 133.7 °C.

$^1$H-NMR (Trifluoressigsäure ,100 MHz): $\delta$ = 0.91 (t), 1.1-1.7 (m), 1.7-2.1 (m), 2.76 (t), 7.4 (m), 7.8 (m)

11.7 g (20 mmol) des oben hergestellten Amides werden in 500 ml trockenem Tetrahydrofuran bei 55 °C gelöst und innerhalb von 10 Minuten zu einer Aufschlämmung von 10 g (0.264 mol) $LiAlH_4$ in 100 ml trockenem Tetrahydrofuran gegeben. Danach wird die Mischung 22 Stunden unter Rückfluß gekocht. Nach dem Abkühlen wird unter Eiskühlung das überschüssige $LiAlH_4$ durch Zugabe von je 20 ml Wasser, 15% NaOH und wieder Wasser zerstört. Das ausgefallene Aluminiumoxid wird abgesaugt und das Filtrat zur Trockene eingeengt. Das Rohprodukt wird in Toluol gelöst und mit Wasser gewaschen. Die organische Phase wird mit $Na_2SO_4$ getrocknet und nach Entfernen des Lösungsmittels aus Methanol umkristallisiert. Man erhält 6.5 g (12 mmol) eines leicht grauen Pulvers mit Schmelzpunkt 88 - 89 °C.
$^1$H-NMR ($CDCl_3$, 100 MHz): $\delta$ = 0.87 (t), 1.0-1.4 (m), 1.4-1.8 (m), 3.08 (t), 5.8-6.1 (m), 6.96 (t)

Entsprechend diesem Verfahren wurden alle para- und metasubstituierten N,N′-dialkylsubstituierten Phenylendiamine sowie die N,N′-dialkylsubstituierten meta-Xylylendiamine mit n-Tetradecyl-, n-Hexadecyl- und n-Octadecylresten synthetisiert.

Beispiel 3:

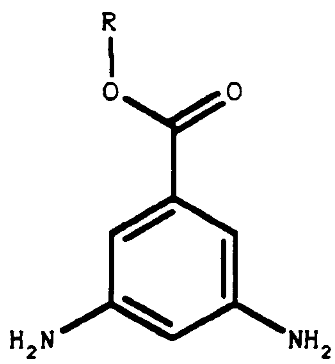

R = $-(CH_2)_{17}-CH_3$

135.25 g (0.5 mol) Octadecanol und 75.6 g (0.75 mol) Triethylamin werden 1.2 l trockenem Chloroform gelöst und mittels Eiskühlung auf 10 °C abgekühlt. Dann wird innerhalb von 1.5 Stunden eine Lösung von 12.07 g (0.52 mol) 3,5-Dinitrobenzoylchlorid in 350 ml trockenem Chloroform so zudosiert, daß die Temperatur nicht über 15 °C steigt. Nach beendeter Zugabe wird unter Rühren auf Raumtemperatur erwärmt und bei Raumtemperatur noch 2 Stunden nachgerührt. Die Reaktionslösung wird anschließend je drei Mal mit 1N HCl, Wasser, 5% $Na_2CO_3$-Lösung und wieder Wasser ausgeschüttelt, die organische Phase mit $Na_2SO_4$ getrocknet und das Lösungsmittel im Vakuum abgezogen. Das Rohprodukt wird aus Ethanol umkristallisiert und im Vakuum bei 30 °C getrocknet. Man erhält 183 g (0.39 mol, 79% d. Th.) leicht gelb gefärbte Kristalle vom Schmelzpunkt 74 - 78 °C.
$^1$H-NMR ($CDCl_3$, 100 MHz): $\delta$ = 0.87 (t), 1.1-1.6 (m), 1.7-2.0 (m), 4.45 (t), 9.1-9.3 (m)

181 g (0.39 mol) 3,5-Dinitrobenzoesäureoctadecylester werden in 700 ml Toluol gelöst und bei 100 °C und 20 Bar $H_2$ mit 5 g Pt-Kohle Kontakt 2 Stunden lang in einem 2 l Edelstahlautoklaven hydriert. Nach dem Abfiltrieren des Katalysators wird das Lösungsmittel im Vakuum abgezogen und das Rohprodukt aus Ethylacetat und Ethanol umkristallisiert. Man erhält 142 g (0.35 mol, 90 % d.Th.) eines weissen Pulvers mit Schmelzpunkt 86 - 87 °C.
$^1$H-NMR (Dimethylsulfoxid-d$^6$, 100 MHz): $\delta$ = 0.86 (t), 1.1-1.5 (m), 1.5-1.9 (m), 4.15 (t), 4.9 (s), 6.01 (t), 6.41 (d)

Analog zu dieser Vorschrift wurden auch der n-Tetradecylester, der n-Hexadecylester, das N-Hexadecylamid, das N-Octadecylamid und das N,N-Dioctadecylamid der 3,5-Diaminobenzoesäure hergestellt.

Beispiel 4: Polyaddition mit Hexamethylendiisocyanat

5.0 g 3,5-Diaminobenzoesäure-hexadecylester werden bei 40 °C in 70 ml N-Methylpyrrolidon gelöst. Zu dieser Lösung werden 2.23 g Hexamethylendiisocyanat gegeben. Es wird bei 40 °C vier Stunden gerührt, bis dünnschichtchromatographisch die Ausgangsprodukte nicht mehr nachzuweisen sind. Danach wird das Produkt in Methanol ausgefällt und im Vakuumtrockenschrank bei 40 °C getrocknet. Ausbeute: 4.306 g

Entsprechend dieser Vorschrift mit leichten Abwandlungen können auch die anderen synthetisierten Diamine mit Hexamethylendiisocyanat zu Polyharnstoffen umgesetzt werden.

Beispiel 5: Polyaddition mit Phenylendiisocyanat

5.0 g N,N′-Dihexadecyl-[1,4-xylylidendiamin] werden bei 40 °C in 150 ml Toluol gelöst, 1.37 g 1,4-Phenylendiisocyanat zugesetzt und 8 Stunden bei dieser Temperatur gerührt. Nach dieser Zeit ist dünnschichtchromatographisch kein Ausgangsprodukt mehr festzustellen. Das Produkt wird in Aceton ausgefällt, in N-Methylpyrrolidon gelöst und wieder durch Eingießen der Lösung in Aceton ausgefällt. Anschließend wird im Vakuumtrockenschrank bei 40 °C getrocknet. Ausbeute: 7.1 g

Entsprechend dieser Vorschrift mit leichten Abwandlungen können auch die anderen synthetisierten Diamine mit Phenylendiisocyanat zu Polyharnstoffen umgesetzt werden.

Beispiel 6: Schichtherstellung nach dem LB-Verfahren

Ein Glas-Objektträger (76 mm x 26 mm) wird nach folgendem Verfahren gereinigt:
Das Glas wird eine Stunde lang in eine 60 °C warme, frisch angesetzte Mischung aus vier Teilen konz. $H_2SO_4$ und einem Teil 30 %iger $H_2O_2$ gelegt, mit sauberem Wasser abgespült und 15 Minuten lang in einer Reinigungslösung (Extran® AP 11, Konz. 2-4 g/l) bei 50 °C ultrabeschallt. Danach wird wieder gründlich mit sauberem Wasser abgespült und in einem warmen Luftstrom getrocknet. Anschließend erfolgt zur Hydrophobisierung eine Behandlung mit Hexamethyldisilazan-Dampf (10 Minuten bei 70 °C).

Multischichten aus dem in Beispiel 4 hergestellten Polyharnstoff werden nach dem Verfahren von Langmuir und Blodgett auf den Glasträger übertragen, indem in einer Langmuir-Filmwaage 0.25 $cm^3$ einer Lösung von 5 mg des Polyharnstoffs in 10 $cm^3$ einer Mischung aus 1 ml N-Methylpyrrolidon und 9 ml $CH_2cl_2$ auf einer wäßrigen Subphase bei einer Subphasentemperatur von 30 °C gespreitet werden. Durch Verkleinerung der monofilmbedeckten Wasseroberfläche wird der Schub auf 15 mN/m eingeregelt und bei diesem Wert konstant gehalten. Der Träger wird nun senkrecht von oben durch die Wasseroberfläche in die Filmwaage eingetaucht (Eintauchgeschwindigkeit: 20 mm/min) und nach einer kurzen Pause (10 sec.) am unteren Umkehrpunkt wieder herausgenommen (Austauchgeschwindigkeit: 10 mm/min) Sowohl beim Eintauch- als auch bei Austauchvorgang wird dabei eine Monolage auf den Träger übertragen. Durch mehrfache Wiederholung des Tauchvorgangs nach jeweils einer Minute Wartezeit am oberen Umkehrpunkt werden insgesamt 20 Doppelschichten übertragen. Die Übertragungsverhältnisse liegen bei 90%. Es werden, auch bei Übertragung von 50 und mehr Monolagen optisch klare, transparente Schichten erhalten.

Beispiel 7: Ellipsometrische Schichtdicken- und Brechungsindexmessungen

Ein Siliziumplättchen (40 mm x 10 mm) wird aus einem Siliziumwafer herausgeschnitten und wie folgt gereinigt:

1. 1 Stunde Behandlung in einer heißen (60 °C), frisch angesetzten Mischung aus einem Teil 30 %iger $H_2O_2$ und vier Teilen konz. $H_2SO_4$. Anschließend wird mit sauberem Wasser abgespült.
2. 30 Sekunden Eintauchen in $NH_4F$ gepufferte HF-Lösung und anschließend wieder mit saüberem Wasser abspülen.

Nach dieser Behandlung sind die Siliziumplättchen hydrophob (Kontaktwinkel zu Wasser: 75°

Schichten eines Polyharnstoffs aus p-Xylylen-di-[N,N′-bis-hexadecyl]amin und Hexamethylendiisocyanat werden wie in Beispiel 6 auf das Siliziumplättchen nach dem Verfahren von Langmuir und Blodgett übertragen (Subphase: Wasser von 30 °C, Schub: 20 mN/m, Eintauchgeschwindigkeit: 20 mm/min, Austauchgeschwindigkeit: 10 mm/min, Pause am oberen Umkehrpunkt: 1 min.). Es werden jeweils sowohl beim Eintauchen als auch beim Austauchen eine Monolage übertragen (Übertragungsverhältnis: 95%). Es werden jeweils Proben mit 10, 30, 50 und 70 Monolagen des Polyharnstoffs hergestellt und ellipsometrisch die Schichtdicken und der Brechungsindex der LB-Filme gemessen (Ergebnis: Brechungsindex bei 633 nm: 1.53, Schichtdicke: 2.3 nm/Monolage).

Beispiel 8: Messungen der thermischen Stabilität

Ein Siliziumplättchen (40 mm x 10 mm) wird aus einem thermisch oxidierten Siliziumwafer (Dicke der Oxidschicht: 160 nm) herausgeschnitten und eine Stunde lang bei 60 °C in eine frisch zubereitete Mischung aus einem Teil 30 %iger $H_2O_2$ und vier Teilen konz. $H_2SO_4$ gelegt. Nach gründlichem Abspülen mit sauberem Wasser wird das Plättchen 15 Minuten lang bei 50 °C in einem Ultraschallbad mit

alkalischem Reinigungsbad (Extran® AP 11, Konz. 2-4 g/l) behandelt, mit sauberem Wasser gründlich abgespült und in einem warmen Luftstrom getrocknet. Danach erfolgt zur Hydrophobierung eine Behandlung mit Hexamethyldisilazan-Dampf (10 Minuten bei 70 °C).

Die Beschichtung nach der LB-Methode mit 8 Monolagen erfolgt mit dem gleichen Polyharnstoff wie in Beispiel 7 beschrieben.

Der beschichtete Träger wird in einer spezielle Apparatur mit linearem Temperaturgradienten (0.5 °C/sec) aufgeheizt. Während des Aufheizvorgangs wird die Dicke der LB-Schicht anhand der Intensität eines von der Probe reflektierten, senkrecht polarisierten Laserstrahl (633 nm) gemessen. Die Temperatur, bei der die maximale Änderung der Schichtdicke erfolgt, beträgt bei dem verwendetem Polyharnstoff 90 °C (Zum Vergleich: Bei LB-Schichten aus 22-Tricosensäure beträgt diese Temperatur 70 °C).

Beispiel 9: Messungen der kritischen Grenzflächenenergie

Ein Siliziumplättchen (40 mm x 10 mm) wird wie in Beispiel 7 gereinigt und wie in Beispiel 7 mit acht Monolagen des in den Beispielen 7 und 8 verwendeten Polyharnstoffs beschichtet (Temperatur der Subphase: 30 °C).

Auf die Oberfläche der übertragenen Schichten werden Flüssigkeitstropfen einer Reihe von n-Alkanen ($C_{12}H_{26}$ - $C_{16}H_{34}$) gebracht und die Kontaktwinkel der Flüssigkeitstropfen mit der Oberfläche gemessen. Aus diesen Kontaktwinkeln wird nach dem Verfahren von Zisman die kritische Oberflächenspannung bestimmt. Es ergibt sich ein Wert von 23.8 mN/m. (Zum Vergleich: Bei einer Polyethylen-Oberfläche ergibt sich bei dieser Messung ein Wert von 31 mN/m).

**Tabelle 1** Einsetzbare Amine

HN - X - NH
A        B

| A=B | X |
|---|---|
| n-$C_{18}H_{37}$ | 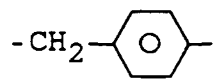 |
| n-$C_{16}H_{33}$ | " |
| " | 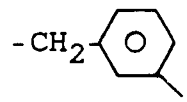 |
| n-$C_{14}H_{29}$ | " |
| n-$C_{18}H_{37}$ | " |
| H | 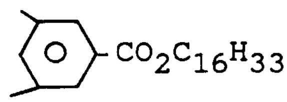 |
| H | 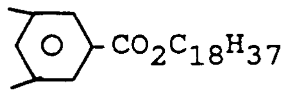 |
| H | 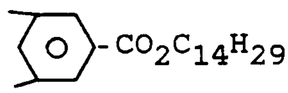 |
| H | 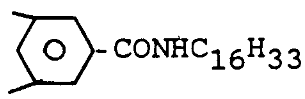 |
| H | 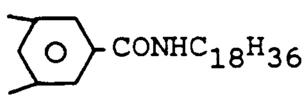 |
| H | 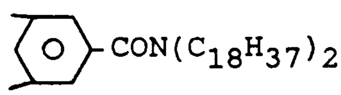 |
| n-$C_{14}H_{29}$ | 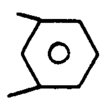 |
| n-$C_{18}H_{37}$ | 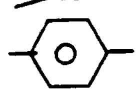 |

**Tabelle 2 Hergestellte Polyharnstoffe**

$$\left[ \begin{array}{c} N \\ | \\ A \end{array} - X - \begin{array}{c} N \\ | \\ B \end{array} - CO - NH - Y - NH - CO \right]$$

| A=B | X | Y |
|---|---|---|
| H | 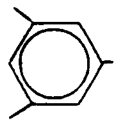 $-CO_2C_{16}H_{33}$ | $-(CH_2)_6-$ |
| $C_{16}H_{33}$ | $-CH_2-$ 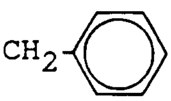 $-CH_2-$ | " |
| H | 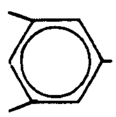 $-CONHC_{16}H_{33}$ | " |
| $C_{16}H_{33}$ | $-CH_2-$ 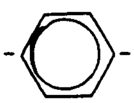 $-CH_2-$ | 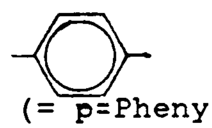 (= p=Phenylen) |
| H | 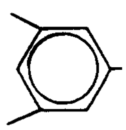 $-CO_2C_{16}H_{33}$ | " |
| H | 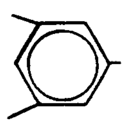 $-CONHC_{16}H_{33}$ | " |

## Patentansprüche

**1.** Polyharnstoff der allgemeinen Formel (I)

$$\left[ -\underset{H}{N}-X-\underset{H}{N}-CO\underset{H}{N}-Y-\underset{H}{N}CO- \right]_n , \qquad (I)$$

wobei

X und Y unabhängig voneinander einen zweiwertigen Rest bedeuten, dessen Kette jeweils mindestens zwei C-Atome enthält und

n eine ganze Zahl über 4 ist,

der mindestens eine Alkylgruppe $C_6$-$C_{26}$- pro wiederkehrende Einheit aufweist, dadurch gekennzeichnet, daß

Y in der Kette frei ist von Stickstoff und

X einen 3,5-verknüpften Phenylrest darstellt, der in 1-Stellung durch einen der Reste
-COOH
$-CO_2-(C_1-C_{24})$-Alkyl,
$(C_4-C_{24})$-Alkyl,
$-O-(C_{14}-C_{24})$-Alkyl,
$-NR^4R^5$, wobei $R^4$ und $R^5$ unabhängig voneinander Alkylreste sind, die jeweils 10 bis 24 C-Atome enthalten, oder
$-CO-NR^4R^5$, wobei $R^4$ und $R^5$ unabhängig voneinander Wasserstoff oder Alkylreste mit 1 bis 24 C-Atomen bedeuten,
substituiert ist.

**2.** Polyharnstoff der allgemeinen Formel (II),

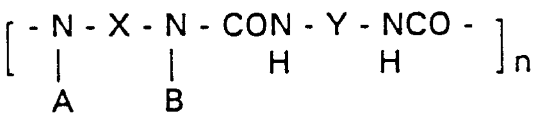,

(II)

wobei

X und Y unabhängig voneinander einen zweiwertigen Rest bedeuten, dessen Kette jeweils mindestens zwei C-Atome enthält und

n eine ganze Zahl über 4 ist, und der Polyharnstoff mindestens eine Alkylgruppe $C_6-C_{26}$- pro wiederkehrende Einheit aufweist,

dadurch gekennzeichnet, daß

A und B unabhängig voneinander $C_1-C_{26}$-Alkylgruppen bedeuten und mindestens eine der Ketten X und Y mindestens eine $CH_2$-Gruppe enthält und Y in der Kette frei ist von Stickstoff.

**3.** Polyharnstoff nach Anspruch 1 oder 2, dadurch gekennzeichnet, daß $Y = (CH_2)_d$, wobei d eine ganze Zahl von 2 bis 20 ist.

**4.** Polyharnstoff nach Anspruch 1 oder 2, dadurch gekennzeichnet, daß $Y = (CH_2\ CH_2\ O)_b-CH_2\ CH_2-$ ist, wobei b eine ganze Zahl von 1 bis 12 ist.

**5.** Polyharnstoff nach Anspruch 1 oder 2, dadurch gekennzeichnet, daß Y eine, ggfs. substituierte, aromatische Gruppe ist.

**6.** Polyharnstoff nach Anspruch 5, dadurch gekennzeichnet, daß Y ein, ggfs. substituierter, Phenylen- oder Naphthylenrest ist.

**7.** Polyharnstoff nach Anspruch 2, dadurch gekennzeichnet, daß X in der Kette frei ist von Stickstoff.

**8.** Polyharnstoff nach Anspruch 7, dadurch gekennzeichnet, daß X eine ggfs. substituierte aromatische Gruppe ist.

**9.** Polyharnstoff nach Anspruch 7, dadurch gekennzeichnet, daß X die allgemeine Formel

$$-(CH_2)_c - X^1 - (CH_2)_c -$$

aufweist, wobei $c = 0$, 1 oder 2 und $X^1$ eine ggfs. substituierte aromatische Gruppe ist.

**10.** Polyharnstoff nach einem der Ansprüche 5, 8 oder 9, dadurch gekennzeichnet, daß die aromatische Gruppe substituiert ist durch mindestens einen der folgenden Reste
-COOH
$-CO_2$-Alkyl, wobei die Alkylgruppe 1 bis 24 C-Atome enthält
-Alkyl mit 4 bis 24 C-Atomen
-O Alkyl, wobei die Alkylgruppe 14 bis 24 C-Atome enthält

$-NR^4R^5$, wobei $R^4$ und $R^5$ unabhängig voneinander Alkylreste sind, die jeweils 10 bis 24, insbesondere 14 bis 22 C-Atome enthalten

$-CO-NR^4R^5$, wobei $R^4$ und $R^5$ unabhängig voneinander Wasserstoff oder Alkylreste mit 1 bis 24 C-Atomen bedeuten.

**11.** Polyharnstoff nach Anspruch 1, dadurch gekennzeichnet, daß die Alkylreste $R^4$ und $R^5$ jeweils 14 bis 22 C-Atome enthalten.

**12.** Polyharnstoff nach Anspruch 8 oder 9, dadurch gekennzeichnet, daß X in der Kette frei ist von Stickstoff und eine Gruppe $X^1$ oder eine Gruppe der allgemeinen Formel

$-(CH_2)_c-X^1-(CH_2)_c$ , in der c = 0,1 oder 2 ist, darstellt, wobei

$X^1$ eine aromatische Gruppe ist, die substituiert ist durch einen der Reste $-OR^2$

$-CH_2OR^2$

$-SO_3R^2$

$-CONHR^2$

$-CONR^2R^3$ und

$R^2$ und $R^3$ unabhängig voneinander H, $C_1$-$C_4$-Alkyl oder $C_2$-$C_4$-Hydroxyalkyl, und

A und/oder B unabhängig voneinander einen verzweigten oder unverzweigten Alkylrest mit 4 bis 24 C-Atomen bedeuten.

**13.** Polyharnstoff nach Anspruch 2, dadurch gekennzeichnet, daß Y eine aromatische Gruppe darstellt, die in der Kette frei ist von Stickstoff, und die substituiert ist durch einen der Reste

$-OR^2$,

$-CH_2OR^2$,

$-SO_3R^2$ ,

$-CONHR^2$ oder

$-CONR^2R^3$ ,

wobei $R^2$ und $R^3$ unabhängig voneinander H,$C_1$-$C_4$-Alkyl oder $C_2$-$C_4$-Hydroxyalkyl bedeuten, und mindestens einer der Reste A und B einen verzweigten oder unverzweigten Alkylrest mit 4 bis 24 C-Atomen darstellt.

**14.** Polyharnstoff nach Ansprüche 12 und 13, dadurch gekennzeichnet, daß mindestens einer der Reste A und B einen verzweigten oder unverzweigten Alkylrest mit 14 bis 22 C-Atomen darstellt.

**15.** Verfahren zur Herstellung einer Verbindung gemäß Anspruch 1 oder 2, dadurch gekennzeichnet, daß man ein Diamin der Formel

NHA - X - NHB mit etwa äquimolaren Mengen eines Diisocyanats der Formel

OCN - Y - NCO umsetzt, wobei A, B, X und Y die in Anspruch 1 oder 2 angegebene Bedeutung aufweisen.

**16.** Schichtelement mit einem festen Schichtträger und mindestens einer hierauf aufgebrachten festen, dünnen Schicht aus einem Polymer mit Carbonamid-Gruppen, dadurch gekennzeichnet, daß das Polymer ein Polyharnstoff nach mindestens einem der Ansprüche 1 oder 2 ist.

**17.** Verfahren zur Herstellung eines Schichtelements gemäß Anspruch 16, dadurch gekennzeichnet, daß man mindestens einen Polyharnstoff nach einem der Ansprüche 1 oder 2 in einem flüchtigen organischen mit Wasser nicht mischbaren Lösemittel löst, die Lösung an der Grenzfläche Wasser/Luft spreitet, die entstehende Schicht nach Verdunsten des Lösemittels komprimiert und nach der Langmuir-Blodgett-Technik auf einen festen Schichtträger überträgt.

## Claims

**1.** A polyurea of the formula (I)

$$\left[\begin{array}{ccccccccccccc} - & N & - & X & - & N & - & CON & - & Y & - & NCO & - \\ & H & & & & H & & H & & H & & & \end{array}\right]_n , \qquad (I)$$

where

X and Y are, independently of one another, a divalent radical whose chain contains in each case at least two carbon atoms, and

n is an integer greater than 4,

which polyurea contains at least one $(C_6\text{-}C_{26})$alkyl group per repeating unit, wherein

Y has no nitrogen in the chain and

X is a 3,5-linked phenyl radical which is substituted in position 1 by one of the radicals
-COOH,
$-CO_2\text{-}(C_1\text{-}C_{24})$ alkyl,
$-(C_4\text{-}C_{24})$alkyl,
$-O\text{-}(C_{14}\text{-}C_{24})$alkyl,
$-NR^4R^5$, where $R^4$ and $R^5$ are, independently of one another, alkyl radicals containing 10 to 24 carbon atoms in each case, or
$-CO\text{-}NR^4R^5$, where $R^4$ and $R^5$ are, independently of one another, hydrogen or alkyl radicals containing 1 to 24 carbon atoms.

**2.** A polyurea of the formula (II),

$$\left[\begin{array}{ccccccccccccc} \cdot & N & \cdot & X & \cdot & N & \cdot & CON & \cdot & Y & \cdot & NCO & \cdot \\ & | & & & & | & & H & & H & & & \\ & A & & & & B & & & & & & & \end{array}\right]_n , \qquad (II)$$

where

X and Y are, independently of one another, a divalent radical whose chain contains in each case at least two carbon atoms and

n is an integer greater than 4, and the polyurea contains at least one $(C_6\text{-}C_{26})$alkyl group per repeating unit,

wherein

A and B are, independently of one another, $(c_1\text{-}C_{26})$alkyl groups and at least one of the chains X and Y contains at least one $CH_2$ group and Y does not contain nitrogen in the chain.

**3.** A polyurea as claimed in claim 1 or 2, wherein Y = $(CH_2)_d$, where d is an integer from 2 to 20.

**4.** A polyurea as claimed in claim 1 or 2, wherein Y = $(CH_2CH_2O)_b\text{-}CH_2CH_2\text{-}$, where b is an integer from 1 to 12.

**5.** A polyurea as claimed in claim 1 or 2, wherein Y is an optionally substituted, aromatic group.

**6.** A polyurea as claimed in claim 5, wherein Y is an optionally substituted, phenylene or naphthylene radical.

**7.** A polyurea as claimed in claim 2, wherein the chain of X is free of nitrogen.

**8.** A polyurea as claimed in claim 7, wherein X is an optionally substituted aromatic group.

**9.** A polyurea as claimed in claim 7, wherein X has the formula

$- (CH_2)_c - X^1 - (CH_2)_c -$,

where c = 0, 1 or 2 and $X^1$ is an optionally substituted, aromatic group.

**10.** A polyurea as claimed in one of claims 5, 8 or 9, wherein the aromatic group is substituted by at least one of the following radicals:
-COOH,
$-CO_2$-alkyl, the alkyl group containing 1 to 24 carbon atoms,
-alkyl containing 4 to 24 carbon atoms,
-O-alkyl, the alkyl group containing 14 to 24 carbon atoms,
$-NR^4R^5$, $R^4$ and $R^5$ being, independently of one another, alkyl radicals each containing 10 to 24, in particular 14 to 22, carbon atoms,
$-CO-NR^4R^5$, $R^4$ and $R^5$ being, independently of one another, hydrogen or alkyl radicals containing 1 to 24 carbon atoms.

**11.** Polyurea as claimed in claim 1, wherein the alkyl radicals $R^4$ and $R^5$ contain in each case 14 to 22 carbon atoms.

**12.** A polyurea as claimed in claim 8 or 9, wherein X has no nitrogen in the chain and is a group $X^1$ or a group of the formula
$-(CH_2)_c-X^1-(CH_2)_c$, in which c = 0, 1 or 2,
where
$X^1$ is an aromatic group which is substituted by one of the radicals
$-OR^2$,
$-CH_2OR^2$,
$-SO_3R^2$,
$-CONHR^2$,
$-CONR^2R^3$ and
$R^2$ and $R^3$ are, independently of one another, H, $(C_1-C_4)$alkyl or $(C_2-C_4)$hydroxyalkyl, and
A and/or B are/is, independently of one another, a branched or unbranched alkyl radical containing 4 to 24 carbon atoms.

**13.** A polyurea as claimed in claim 2, wherein Y is an aromatic group which contains no nitrogen in the chain and which is substituted by one of the radicals:
$-OR^2$,
$-CH_2OR^2$,
$-SO_3R^2$,
$-CONHR^2$ or
$-CONR^2R^3$,
where $R^2$ and $R^3$ are, independently of one another, H, $(C_1-C_4)$alkyl or $(C_2-C_4)$hydroxyalkyl, and at least one of the radicals A and B is a branched or unbranched alkyl radical containing 4 to 24 carbon atoms.

**14.** A polyurea as claimed in claims 12 and 13, wherein at least one of the radicals A and B is a branched or unbranched alkyl radical containing 14 to 22 carbon atoms.

**15.** A process for preparing a compound as claimed in claim 1 or 2, which comprises reacting a diamine of the formula
NHA - X - NHB with roughly equimolar amounts of a diisocyanate of the formula
OCN - Y - NCO,
A, B, X and Y having the meaning specified in claim 1 or 2.

**16.** A sandwich having a solid layer base and at least one solid, thin layer deposited thereon composed of a polymer containing carbonamide groups, wherein the polymer is a polyurea as claimed in at least one of claims 1 or 2.

17. The process for preparing a sandwich as claimed in claim 16, wherein at least one polyurea as claimed in one of claims 1 or 2 is dissolved in a volatile organic solvent which is not miscible with water, the solution is spread at the water/air interface, and the layer formed after the solvent has evaporated is compressed and transferred to a solid layer base by the Langmuir-Blodgett technique.

## Revendications

1. Polyurée de formule générale (I)

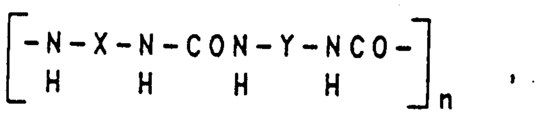

(I)

où

X et Y indépendamment l'un de l'autre représentent un radical bivalent dont la chaîne comporte chaque fois au moins 2 atomes de C et

n est un nombre entier supérieur à 4,

qui présente au moins un groupe alkyle en $C_6$-$C_{26}$ par unité récurrente, caractérisée en ce que

Y est dépourvu d'azote dans la chaîne et

X représente un radical phényle relié en position 3,5, qui est substitué en position 1 par l'un des radicaux
-COOH
-$CO_2$-alkyle-($C_1$-$C_{24}$),
alkyle-($C_4$-$C_{24}$),
-O-alkyle-($C_{14}$-$C_{24}$),
-$NR^4R^5$, $R^4$ et $R^5$, indépendamment l'un de l'autre, étant des radicaux alkyle qui contiennent chaque fois de 10 à 24 atomes de C ou
-CO-$NR^4R^5$, $R^4$ et $R^5$, indépendamment l'un de l'autre, représentant l'hydrogène ou des radicaux alkyle avec 1 à 24 atomes de C.

2. Polyurée de formule générale (II)

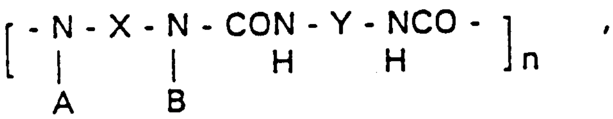

(II)

où

X et Y indépendamment l'un de l'autre, représentent un radical bivalent dont la chaîne contient chaque fois deux atomes de C et

n est un nombre entier supérieur à 4 et la polyurée présente au moins un groupe alkyle en $C_6$-$C_{26}$ par unité récurrente,

caractérisé en ce que

A et B indépendamment l'un de l'autre représentent des groupes alkyle en $C_1$-$C_{26}$ et au moins l'une des chaînes X et Y contient au moins un groupe $CH_2$ et Y est dépourvu d'azote dans la chaîne.

3. Polyurée selon la revendication 1 ou 2, caractérisée en ce que Y = $(CH_2)_d$, d étant un nombre entier de 2 à 20.

4. Polyurée selon la revendication 1 ou 2, caractérisée en ce que Y = $(CH_2$-$CH_2O)_b$-$CH_2$-$CH_2$-, b étant un nombre entier de 1 à 12.

**5.** Polyurée selon la revendication 1 ou 2, caractérisée en ce que Y est un groupe aromatique éventuellement substitué.

**6.** Polyurée selon la revendication 5, caractérisée en ce que Y est un radical phénylène ou naphtylène, éventuellement substitué.

**7.** Polyurée selon la revendication 2, caractérisée en ce que X dans la chaîne est dépourvu d'azote.

**8.** Polyurée selon la revendication 7, caractérisée en ce que X est un groupe aromatique éventuellement substitué.

**9.** Polyurée selon la revendication 7, caractérisée en ce que X présente la formule générale

$-(CH_2)_c-X^1-(CH_2)_c-$

où c = 0, 1 ou 2 et $X^1$ est un groupe aromatique éventuellement substitué.

**10.** Polyurée selon l'une des revendications 5, 8 ou 9, caractérisée en ce que le groupe aromatique est substitué par au moins l'un des radicaux suivants
-COOH
$-CO_2$-alkyle, le groupe alkyle contenant de 1 à 24 atomes de carbone
- alkyle avec 4 à 24 atomes de carbone
-O-alkyle, le groupe alkyle contenant de 14 à 24 atomes de carbone
$-NR^4R^5$, $R^4$ et $R^5$, indépendamment l'un de l'autre, étant des radicaux alkyle avec 10 à 24 atomes de C, plus particulièrement de 14 à 22 atomes de C,
$-CO-NR^4R^5$, $R^4$ et $R^5$, indépendamment l'un de l'autre, représentant l'hydrogène ou des radicaux alkyle avec 1 à 24 atomes de C.

**11.** Polyurée selon la revendication 1, caractérisée en que les radicaux alkyle $R^4$ et $R^5$ contiennent chacun de 14 à 22 atomes de carbone.

**12.** Polyurée selon la revendication 8 ou 9, caractérisée en ce que X dans la chaîne est dépourvu d'azote et représente un groupe $X^1$ ou un groupe de formule générale
$-(CH_2)_c-X^1-(CH_2)_c$, dans laquelle c = 0, 1 ou 2, où
$X^1$ est un groupe aromatique qui est substitué par un des radicaux
$-OR^2$,
$-CH_2OR^2$,
$-SO_3R^2$,
$-CONHR^2$,
$-CONR^2R^3$ et
$R^2$ et $R^3$, indépendamment l'un de l'autre, représentent H, alkyle en $C_1$-$C_4$ ou hydroxyalkyle en $C_2$-$C_4$, et
A et/ou B, indépendamment l'un de l'autre, un radical alkyle ramifié ou non ramifié avec 4 à 24 atomes de C.

**13.** Polyurée selon la revendication 2, caractérisée en ce que Y représente un groupe aromatique qui est dépourvu d'azote dans la chaîne et qui est substitué par un des radicaux
$-OR^2$,
$-CH_2OR^2$,
$-SO_3R^2$,
$-CONHR^2$, ou
$-CONR^2R^3$,
$R^2$ et $R^3$, indépendamment l'un de l'autre, représentant H, alkyle en $C_1$-$C_4$ ou hydroxyalkyle en $C_2$-$C_4$, et au moins l'un des radicaux A et B représente un radical alkyle ramifié ou non ramifié avec 4 à 24 atomes de C.

**14.** Polyurée selon les revendications 12 et 13, caractérisée en ce que au moins l'un des radicaux A et B représente un radical alkyle ramifié ou non ramifié avec 14 à 22 atomes de C.

15. Procédé pour la préparation d'un composé selon la revendication 1 ou 2, caractérisé en ce qu'on fait réagir une diamine de formule
NHA-X-NHB avec des quantités d'environ équimolaires d'un diisocyanate de formule
OCN-Y-NCO,
A, B, X et Y ayant la signification donnée dans la revendication 1 ou 2.

16. Elément stratifié avec un support de couche solide et au moins une couche mince, solide d'un polymère comportant des groupes carboxamide, déposée sur celui-ci, caractérisé en ce que le polymère est une polyurée selon au moins l'une des revendications 1 ou 2.

17. Procédé pour la préparation d'un élément stratifié selon la revendication 16, caractérisé en ce qu'on dissout dans un solvant organique volatil, non miscible à l'eau, au moins une polyurée selon l'une des revendications 1 ou 2, on étale la solution sur l'interface eau/air, on comprime la couche formée après évaporation du solvant et on transfère sur un support de couche solide à l'aide de la technique de Langmuir-Blodgett.